# FASCICULE DE BREVET EUROPEEN

(11) **EP 1 635 203 B1**
(45) Date de publication et mention de la délivrance du brevet: **10.02.2010**
(21) Numéro de dépôt: 05291865.3
(22) Date de dépôt: 08.09.2005
(51) Int. Cl.: G02B 6/30

(54) **Procédé de couplage entre une fibre optique et un guide d'onde**
Verfahren zur Kopplung zwischen einer optischen Faser und einen Wellenleiter
Method of coupling an optical fibre to a waveguide

(30) Priorité: 10.09.2004 FR 0409639
(43) Date de publication de la demande: 15.03.2006
(73) Titulaire: Kloe S.A., 34000 Montpellier (FR)
(72) Inventeur: Coudray, Paul, 34000 Montpellier (FR)
(74) Mandataire: Thinat, Michel

(56) Documents cités:
- WO-A-03/016968
- WO-A-2004/059358
- US-A- 5 784 509
- US-A1- 2003 219 208

## Description

L'invention concerne un composant incluant un substrat et une couche tampon déposée sur ce substrat, au moins un guide d'onde sur la couche tampon, et au moins une gorge recevant une extrémité d'une fibre optique pour positionner et maintenir cette extrémité de fibre optique en vis-à-vis d'une extrémité du guide d'onde afin de coupler cette fibre optique au guide d'onde.

L'invention concerne plus généralement un couplage entre une fibre optique ou une matrice de plusieurs fibres optiques et un circuit optique intégré comportant un ou plusieurs guides d'ondes.

Ce type de couplage est réalisé de façon identique en entrée et en sortie d'un circuit optique, pour transférer en entrée un signal véhiculé par des fibres optiques vers le circuit optique, et pour transférer en sortie un signal depuis ce circuit optique vers une ou plusieurs autres fibres optiques.

Selon un procédé connu de fabrication d'un tel couplage, le composant est obtenu par assemblage d'un bloc auquel est fixée chaque extrémité de fibre optique et d'une puce qui comporte le ou les guides d'onde constituant le circuit optique.

Plus particulièrement, chaque fibre optique est positionnée et collée sur le bloc qui comporte à cet effet des gorges à section en V qui maintiennent les fibres optiques parallèles entre elles à des distances constantes et contrôlées les unes des autres. La distance séparant deux fibres consécutives sur le bloc vaut par exemple 250 *µ*m, et les extrémités des fibres optiques sont toutes situées le long d'un bord supérieur d'une même face frontale du bloc.

L'extrémité des fibres optiques ainsi que la face frontale du bloc peuvent être polis pour que toutes les extrémités de fibres optiques soient propres et précisément positionnées dans le plan de la face frontale du bloc.

Ce polissage peut introduire un angle d'inclinaison de la face frontale du bloc par rapport à un plan qui est normal aux fibres optiques et qui passe par leurs extrémités. Cette inclinaison, qui est prévue pour éviter des problèmes liés aux réflexions pouvant perturber le signal transféré dans le couplage, vaut typiquement huit degrés.

La matrice de fibres optiques fixée au bloc est ensuite couplée avec un ou plusieurs guides d'ondes par exemple par collage de la face frontale du bloc sur une face correspondante de la puce, pour que l'extrémité de chaque fibre optique soit située en vis-à-vis et sensiblement contre une extrémité de guide d'onde correspondante.

La qualité du couplage ainsi obtenu, c'est-à-dire, dans le cas d'un couplage d'entrée, le rapport du signal transféré par le couplage sur le signal transmis par les fibres optiques d'entrée, est d'autant plus élevée que le positionnement des extrémités de fibres optiques par rapport aux extrémités de guides d'ondes est bien ajusté.

Pratiquement, ceci nécessite un positionnement très précis du bloc par rapport à la puce, selon les six degrés de liberté du bloc par rapport à la puce. Cet ajustement est réalisé au cours d'une opération de collage du type "par voie active". L'expression "par voie active" signifie que cette opération est réalisée en alimentant le couplage et en modifiant la position du bloc jusqu'à ce que celle-ci corresponde à un maximum de signal transféré. La position du bloc par rapport à la puce doit également rester optimale pendant le collage du bloc.

Cette opération est réalisée soit manuellement par un opérateur qui ajuste la position du bloc jusqu'à obtenir un maximum de signal transféré, et effectue le collage dans la position adéquate, soit avec une machine, dite "autoaligneuse", apte à déplacer le bloc selon ses six degrés de liberté tout en suivant la quantité de signal transféré de manière à effectuer le collage dans la position optimale.

Cette opération d'ajustement et de collage est consommatrice de temps et présente un faible rendement en raison de la délicatesse qu'elle nécessite et de la fragilité de la connexion après collage. La mise en oeuvre de gorges en V réalisées en partie supérieure du bloc, et la préparation des matrices de fibres bloquées dans ces gorges est également très coûteuse.

Le document WO 03/016968 A1 décrit un procédé de fabrication de gorges accueillant des fibres optiques dans un composant comprenant un substrat, une couche tampon et des guides d'onde optiques intégrés, les gorges étant alignées avec les guides. Le matériau de la couche n'est pas un hybride organique-inorganique photosensible.

Le but de l'invention est de remédier à ces inconvénients en proposant une solution réduisant le coût de fabrication d'un tel composant.

A cet effet, l'invention a pour objet un composant incluant un substrat et une couche tampon déposée sur ce substrat, au moins un guide d'onde sur la couche tampon, et au moins une gorge recevant une extrémité d'une fibre optique pour positionner et maintenir cette extrémité de fibre optique en vis-à-vis d'une extrémité du guide d'onde afin de coupler cette fibre optique au guide d'onde, caractérisé en ce qu'au moins une gorge est réalisée dans la couche tampon et dans le substrat.

Les gorges étant réalisées directement dans le composant qui supporte le ou les guides d'ondes, elles sont positionnées directement de façon précise par rapport aux extrémités de ces guides d'ondes. Le fait de placer ensuite les extrémités de fibres optiques dans ces gorges est suffisant pour obtenir un positionnement précis de ces extrémités de fibres optiques par rapport aux extrémités de guides d'ondes correspondantes, sans qu'il soit nécessaire de prévoir une opération d'ajustement par voie active.

Selon un mode de réalisation préféré de l'invention, au moins une gorge présente une section en forme de U à base carrée.

Selon un mode de réalisation préféré de l'invention, au moins une gorge s'étend selon une direction longitudinale et comprend une paroi terminale sensiblement plane réalisée dans le substrat et dans la couche tampon, et cette paroi sensiblement plane s'étend selon une direction normale à la direction longitudinale de la gorge.

Selon un mode de réalisation préféré de l'invention, le composant comprend plusieurs gorges recevant chacune une extrémité de fibre optique, et une lame de verre collée sur les extrémités de plusieurs fibres optiques pour maintenir ces extrémités de fibres optiques en position dans les gorges dans lesquelles elles sont respectivement placées.

Selon un mode de réalisation préféré de l'invention, la lame de verre comprend des lignes gravées dans lesquelles sont positionnées les extrémités de fibres optiques lorsque cette lame de verre est collée sur leurs extrémités.

L'invention concerne également un procédé de fabrication d'un tel composant, consistant à :
- appliquer la couche tampon sur le substrat ;
- masquer une ou plusieurs zone de la couche tampon correspondant chacune à une gorge à graver, et insoler cette couche tampon ;
- déposer une couche guidante sur la couche tampon ;
- inscrire un ou plusieurs guides d'onde dans la couche guidante ;
- graver la couche guidante et la couche tampon ;
- graver, par un procédé dit RIE, la couche de substrat dans chaque zone gravée de la couche tampon pour terminer chaque gorge.

Selon un mode de mise en oeuvre particulier, une couche de recouvrement similaire à la couche tampon est déposée après gravure de la couche guidante et de la couche tampon, et est masquée et gravée pour recouvrir chaque guide d'onde, avant mise en oeuvre du procédé de gravure RIE.

Selon un mode de mise en oeuvre particulier, un léger recuit est appliqué à la couche tampon après insolation de celle-ci, et avant dépôt de la couche guidante sur cette couche tampon.

Selon un mode de réalisation particulier, la couche tampon et/ou la couche de recouvrement sont en matériau hybride organique-inorganique.

Selon un mode de mise en oeuvre particulier, au moins un guide d'onde est inscrit dans la couche tampon au moyen d'un faisceau laser ayant une forme définie par un microtrou carré.

L'invention sera maintenant décrite plus en détail, et en référence aux dessins annexés qui en illustrent une forme de réalisation à titre d'exemple non limitatif.
La figure 1 montre un substrat et une couche tampon pour la fabrication du composant selon l'invention ;
La figure 2 montre schématiquement une étape d'insolation de la couche tampon ;
La figure 3 montre un cache qui est appliqué au composant pour l'étape de la figure 2 ;
La figure 4 montre schématiquement une étape d'application d'une couche guidante ;
La figure 5 montre schématiquement des guides d'onde gravés dans la couche guidante en vue de dessus ;
La figure 6 montre de profil les guides d'onde représentés figure 5 ;
La figure 7 montre schématiquement des gorges gravées dans la couche tampon ;
La figure 8 montre schématiquement une couche de recouvrement appliquée sur la couche tampon et sur les guides d'onde ;
La figure 9 montre la couche de recouvrement gravée en vue de côté ;
La figure 10 montre la couche de recouvrement de la figure 9 en vue de dessus ;
La figure 11 montre les gorges qui sont gravées dans le substrat du composant ;
La figure 12 montre un composant selon l'invention dans son ensemble en vue de côté.

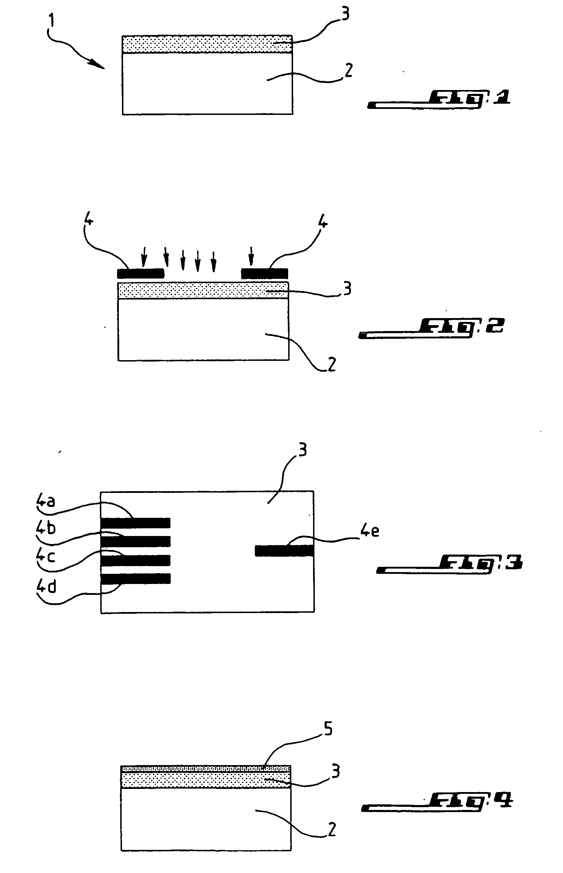

La figure 1 qui correspond à une première étape de fabrication d'un composant 1 selon l'invention montre, en vue de profil, un substrat 2 tel que par exemple du silicium, sur lequel a été déposée une couche tampon 3.

Les figures 2 et 3, montrent respectivement en vue de côté et de dessus, une opération d'insolation de la couche tampon 3 par rayonnements ultraviolets, après masquage de celle-ci. Le masquage 4 est ici réalisé par inscription sur cette couche tampon d'un dessin qui cache plusieurs zones. Chaque zone cachée est représentée par un trait noir, repéré respectivement par 4a, 4b, 4c, 4d et 4e et correspond à une gorge à graver ultérieurement.

Chaque zone cachée 4a à 4e de la couche tampon 3 sera gravée ultérieurement par dilution dans des solvants qui ne dissolvent pas les parties insolées par ultraviolets.

Cependant, cette gravure n'est pas réalisée après l'étape des figures 2 et 3, mais ultérieurement, comme détaillé plus bas. A cet effet, un léger recuit est appliqué à la couche tampon pour durcir légèrement les zones non insolées afin de pouvoir reporter l'étape de gravure.

Chaque trait noir de la figure 3 qui représente une zone cachée correspondant au futur emplacement d'une fibre optique a par exemple une largeur de 125 *µ*m ce qui correspond au diamètre d'une fibre optique qui sera ensuite insérée dans la gorge réalisée ultérieurement.

Deux traits noirs contigus tels que 4b et 4c sont par exemple espacés de 250 *µ*m, ce qui correspond à l'espacement entre coeurs de fibres optiques adjacentes dans une matrice de fibres optiques.

Chaque trait noir a une longueur comprise entre 5 et 10 mm. Dans l'exemple des figures, il est prévu quatre fibres optiques en entrée à coupler avec quatre extrémités de guides d'ondes non représentés ; et une fibre optique de sortie à connecter avec une extrémité de guide d'onde. Ce circuit pourrait être un multiplexeur de longueurs d'ondes à 4 voies.

Figure 4, une couche guidante 5 est déposée sur la couche tampon 3, ce dépôt étant réalisé par exemple à la tournette, ou par trempage-tirage, ou par toute autre méthode de dépôt de couche mince.

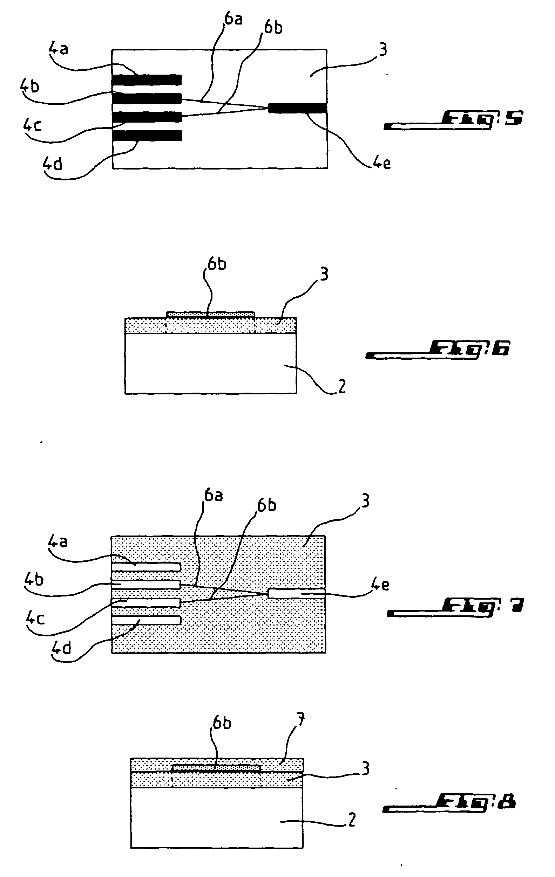

Les figures 5 et 6 montrent, respectivement en vue de dessus et de côté, deux guides d'ondes 6a et 6b qui sont inscrits dans la couche guidante 5. Ces guides d'ondes 6a, 6b font partie du circuit optique du composant selon l'invention, ils sont ici deux à titre d'exemple illustratif seulement.

Ces guides d'ondes sont ici inscrits dans la couche guidante par écriture directe laser, ce qui permet de les positionner avec une précision de l'ordre du dixième de micron.

Ces guides d'onde peuvent également être inscrits par une autre méthode, comme par exemple avec un aligneur de masque, des repères d'alignement pouvant alors être préinscrits dans la couche tampon lors du masquage de celle-ci. Il est ainsi possible grâce à un système de visualisation de ces repères, de positionner le masque de telle manière que les guides d'ondes soient en regard de la future position du coeur des fibres, c'est-à-dire dans l'axe de chaque trait noir.

Sur la figure 5, les guides d'ondes 6a et 6b sont représentés par des traits rectilignes inclinés par rapport aux traits noirs 4a à 4e qui sont horizontaux sur cette figure.

Mais chaque extrémité de guide d'onde s'étend en fait selon une direction qui est celle du trait noir 4b, 4c ou 4e correspondant, à savoir selon une direction horizontale sur la figure 5, et ce, sur une longueur de l'ordre du millimètre. Chaque extrémité de guide d'onde prolonge ainsi un trait noir correspondant dans la même direction que celui-ci, afin d'améliorer la qualité du couplage entre extrémité de fibre optique et extrémité de guide d'onde.

En conséquence, chaque guide d'onde 6a et 6b qui est représenté par un trait droit sur les figures a en fait une forme courbe, encore appelée "S-bend", cette forme incluant un point d'inflexion situé sensiblement à mi-longueur du guide d'onde.

Chaque guide d'onde 6a, 6b se termine exactement à l'extrémité de chaque trait noir 4b, 4c ou 4e correspondant en étant positionné dans le prolongement de l'axe central du trait noir correspondant. L'extrémité de chaque guide d'onde est parfaitement plane et normale à la direction de propagation de la lumière dans ce guide d'onde. Dans le cas d'une écriture directe par rayon laser, ceci est obtenu par utilisation d'un microtrou carré pour dimensionner le faisceau laser.

Cette étape permet de préparer le positionnement latéral des guides d'onde par rapport aux fibres optiques, les guides d'ondes étant inscrits dans l'axe central des gorges correspondantes.

L'extrémité de ces guides d'onde peut avantageusement être relativement plus large que la largeur nominale du guide pour définir une forme d'entonnoir destinée à compenser un éventuel défaut d'alignement du guide par rapport à la gorge.

Les figures 6 et 7 représentent le résultat d'une opération de gravure de la couche guidante et de la couche tampon : les parties non exposées aux ultraviolets de la couche guidante et de la couche tampon sont dissoutes dans des solvants de type alcoolique ou de l'acétone, tandis que les parties exposées aux ultraviolets restent en place.

Ainsi, à l'issue de cette opération de gravure, les traits noirs 4a à 4e des figures précédentes deviennent des ouvertures de la couche tampon 3, constituant la partie supérieure des gorges qui seront terminées ensuite.

La figure 8 montre le résultat d'une opération de dépôt d'une couche de recouvrement 7 qui est ici identique à la couche tampon 3 et est déposée sur l'ensemble du composant. Cette couche est ici déposée à la tournette ou par trempage tirage, mais elle peut également être déposée par toute autre méthode de dépôt de couche mince.

Dans cet exemple, la couche de recouvrement 7 est identique à la couche tampon, ce qui confère au guide d'onde une structure symétrique. Mais l'invention s'applique aussi à une structure du type asymétrique dans laquelle la couche de recouvrement est différente de la couche tampon.

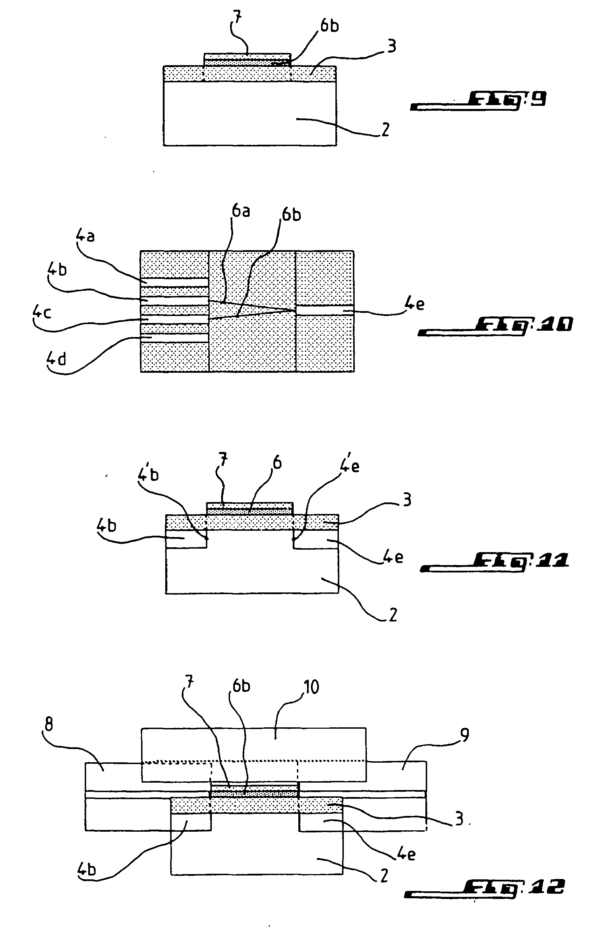

Les figures 9 et 10 représentent le résultat d'une opération de masquage et de gravure de la couche de recouvrement 7 précédemment déposée. Dans cette opération, la couche de recouvrement 7 est masquée de telle sorte qu'après insolation et gravure, elle recouvre la zone centrale du composant dans laquelle sont situés les guides d'ondes, mais pas les zones latérales dans lesquelles la couche tampon a été préalablement gravée.

Figure 11, le substrat 2 du composant est gravé selon le procédé connu sous l'acronyme RIE qui signifie "Reactive Ion Etching" de manière à terminer les gorges dans les zones 4a à 4e c'est-à-dire dans les parties de la couche tampon 3 qui ont été gravées à l'étape précédente.

La gravure RIE est une gravure qui attaque préférentiellement les matériaux conducteurs électriquement. La couche tampon 3, la couche guidante 5 ainsi que la couche de recouvrement 7 ne sont pas électriquement conductrices de sorte qu'elle sont très faiblement endommagées par la gravure RIE. La gravure RIE des gorges dans le substrat provoque une érosion de la couche tampon et/ou guidante qui est réduite à environ un centième de la profondeur de la gorge.

Le procédé de gravure RIE est anisotrope et totalement directif, de sorte que seul le substrat en silicium est attaqué et ce, de façon homogène, dans les zones 4a à 4e où il n'est pas recouvert par la couche tampon.

D'autre part, le procédé de gravure RIE permet d'ajuster la profondeur de gravure avec une précision de l'ordre de la fraction de micron, ce qui permet d'ajuster le positionnement vertical des extrémités de fibres optiques relativement aux extrémités de guides d'ondes.

Avantageusement, les gorges ont une section qui a la forme de la lettre U, et dont la base est carrée, ces gorges pouvant être réalisées par gravure selon le procédé RIE, alors qu'elles ne peuvent pas être réalisées de façon simple par les procédés classiques de gravure chimique.

La gravure chimique a une anisotropie qui est liée à l'orientation du cristal attaqué. Elle permet par exemple de réaliser des gorges ayant une section en forme de V. Mais la gravure chimique ne permet pas de réaliser des gorges avec des flancs abrupts, c'est-à-dire des flancs ayant une orientation normale à la surface de référence, c'est-à-dire la surface à laquelle est appliquée l'attaque chimique.

La réalisation de flancs abrupts est rendue possible par la gravure RIE, qui est une gravure sèche consistant à bombarder la surface à graver avec un faisceau d'ions, à nettoyer cette surface avec un liquide, et à répéter ces opérations.

Il est donc possible de réaliser des gorges ayant des flancs latéraux abrupts, mais ayant aussi un flanc abrupt en extrémité de gorge, tel que les flancs d'extrémité de gorge qui sont repérés par 4'b et 4'e sur la figure 11.

Le flanc d'une extrémité de gorge est ainsi perpendiculaire aux deux parois latérales de cette gorge à section en U, mais il est également orienté verticalement sur les figures, c'est-à-dire selon une direction normale à l'axe longitudinal de cette gorge.

Chaque flanc d'extrémité de gorge constitue ainsi une butée longitudinale contre laquelle vient en appui l'extrémité de la fibre que reçoit cette gorge, ce qui permet de positionner l'extrémité de fibre de verre longitudinalement, sensiblement contre le guide d'onde correspondant, sans avoir à réaliser d'ajustement particulier.

La couche tampon et/ou la couche de recouvrement sont avantageusement des couches hybrides organique-inorganique, de manière à résister à la gravure RIE. Il n'est ainsi pas nécessaire de prévoir un masque séparé pour l'opération de gravure RIE, puisque ce masque est réalisé par la couche tampon elle-même ou par la couche de recouvrement.

Le choix pour la couche tampon et/ou la couche guidante, d'un matériau hybride organique-inorganique c'est-à-dire comprenant un réseau organique et un réseau minéral imbriqués l'un dans l'autre s'avère être avantageux.

Le réseau organique a un caractère photosensible permettant de graver un tel matériau avec des solvants. Le réseau minéral confère un caractère résistant à de nombreuses gravures chimiques acides ou basiques, ainsi qu'aux gravures sèches telles que la gravure RIE ou la gravure profonde DRIE.

La figure 12 montre schématiquement, en vue de côté un composant 1 selon l'invention. Les fibres optiques ou matrices de fibres optiques telles que celles repérées par 8 et par 9 clivées et/ou polies à la même longueur, sont positionnées et collées dans les gorges 4a à 4e qui ont été réalisées dans le substrat 2 en ayant leurs extrémités en appui contre les flancs terminaux de ces gorges.

Ces fibres optiques sont positionnées latéralement, du fait que les gorges gravées dans le silicium et dans la couche tampon ont une largeur qui a pour valeur le diamètre des fibres optiques, et du fait que les guides d'ondes sont inscrits précisément dans l'axe de ces gorges.

Ces fibres optiques sont positionnées axialement (ou longitudinalement) par le fait qu'elles sont placées en butée dans les gorges. Ceci est rendu possible d'une part par le fait que la gravure RIE qui est anisotropique et directive permet de réaliser des gorges présentant des flancs 4'b et 4'e parfaitement abrupts, et d'autre part par le fait que les guides d'ondes ont été inscrits juste à l'extrémité des gorges.

En pratique, l'extrémité d'une fibre optique et celle du guide d'onde correspondant sont séparées par une distance de quelques microns, cet espace étant comblé par de la colle constituant un gel d'indice, de manière à réduire les pertes de par réflexion de Fresnel, c'est-à-dire les pertes de couplage.

Le positionnement vertical des fibres optiques est assuré par la précision de la gravure RIE et par le collage d'une lame de verre 10 sur l'extrémité des fibres optiques d'entrée, sur la zone correspondant au circuit optique et sur l'extrémité des fibres optiques de sortie.

Dans cette lame de verre 10 ont été gravées des lignes d'une largeur de 125 *µ*m et d'une profondeur inférieure au rayon d'une fibre optique, de manière à maintenir les fibres optiques en position et en appui au fond des gorges.

Le procédé de fabrication offre notamment les avantages suivants : il assure une meilleure rigidité du couplage entre les fibres optiques et les guides d'ondes, puisqu'un seul substrat commun les supporte.

Ce procédé permet de réaliser un alignement précis des gorges par rapport aux extrémités de guides d'ondes, selon la direction latérale, verticale et longitudinale.

Ainsi, le positionnement des extrémités de fibres optiques par rapport aux extrémités de guides d'onde est automatique et ne nécessite plus de mesure de contrôle en cours d'alignement, par voie active, ce qui induit un gain de temps pour l'étape d'alignement.

Il n'est plus nécessaire d'utiliser des fibres optiques bloquées dans des gorges à section en V, d'où une très nette réduction des coûts de cette étape.

## Revendications

1. Composant (1) incluant un substrat (2) et une couche tampon (3) déposée sur ce substrat, au moins un guide d'onde (6a, 6b) sur la couche tampon (3), et au moins une gorge (4a, 4b, 4c, 4d, 4e) recevant une extrémité d'une fibre optique (8, 9) pour positionner et maintenir cette extrémité de fibre optique en vis-à-vis d'une extrémité du guide d'onde (6a, 6b) afin de coupler cette fibre optique (8, 9) au guide d'onde (6a, 6b), cette gorge (4a, 4b, 4c, 4d, 4e) étant réalisée dans la couche tampon (3) et dans le substrat (2) **caractérisé en ce que** la couche tampon (3) est réalisée dans un matériau hybride organique-inorganique photosensible.

2. Composant selon la revendication 1, comprenant au moins une gorge (4a, 4b, 4c, 4d, 4e) présentant une section en forme de U.

3. Composant selon la revendication 2, comprenant au moins une gorge (4a, 4b, 4c, 4d, 4e) présentant une section en forme de U à base carrée.

4. Composant selon l'une des revendications 1 à 3, dans lequel au moins une gorge (4a, 4b, 4c, 4d, 4e) s'étend selon une direction longitudinale et comprend une paroi terminale sensiblement plane (4'a, 4'e) réalisée dans le substrat (2) et dans la couche tampon (3), et dans lequel cette paroi sensiblement plane (4'a, 4'e) s'étend selon une direction normale à la direction longitudinale de la gorge.

5. Composant selon l'une des revendications 1 à 4, comprenant plusieurs gorges (4a, 4b, 4c, 4d, 4e) recevant chacune une extrémité de fibre optique (8, 9), et comprenant une lame de verre (10) collée sur les extrémités de plusieurs fibres optiques (8, 9) pour maintenir ces extrémités de fibres optiques (8, 9) en position dans les gorges (4a, 4b, 4c, 4d, 4e) dans lesquelles elles sont respectivement placées.

6. Composant selon la revendication 5, dans lequel la lame de verre (10) comprend des lignes gravées dans lesquelles sont positionnées les extrémités de fibres optiques (8, 9) lorsque cette lame de verre (10) est collée sur leurs extrémités.

7. Procédé de fabrication d'un composant (1) incluant un substrat (2) et une couche tampon (3) déposée sur ce substrat (2), au moins un guide d'onde (6a, 6b) situé sur la couche tampon (3), et au moins une gorge (4a, 4b, 4c, 4d, 4e) pour positionner et maintenir cette extrémité de fibre optique en vis-à-vis d'une extrémité du guide d'onde (6a, 6b) afin de coupler cette fibre optique (8, 9) au guide d'onde (6a, 6b), consistant à :
- appliquer une couche tampon (3) en matériau hybride organique inorganique sur le substrat (2) ;
- masquer une ou plusieurs zone (4a, 4b, 4c, 4d, 4e) de la couche tampon (3) correspondant chacune à une gorge à graver, et insoler cette couche tampon (3) ;
- déposer une couche guidante (5) sur la couche tampon (3) ;
- inscrire un ou plusieurs guides d'onde (6a, 6b) dans la couche guidante (5) ;
- graver la couche guidante (5) et la couche tampon (3) ;
- graver, par un procédé dit RIE, la couche de substrat dans chaque zone gravée (4a, 4b, 4c, 4d, 4e) de la couche tampon (3) pour terminer chaque gorge.

8. Procédé selon la revendication 7, dans lequel un léger recuit est appliqué à la couche tampon (3) après insolation de celle-ci, et avant dépôt de la couche guidante (5) sur cette couche tampon (3).

9. Procédé selon la revendication 7 ou 8, dans lequel une couche de recouvrement (7) similaire à la couche tampon (3) est déposée après gravure de la couche guidante (5) et de la couche tampon (3), et est masquée et gravée pour recouvrir chaque guide d'onde, avant mise en oeuvre du procédé de gravure RIE.

10. Procédé selon l'une des revendications 7 à 9 dans lequel la couche tampon (3) et/ou la couche de recouvrement (7) constituent un masque pour graver par procédé RIE le substrat (2) pour terminer chaque gorge.

11. Procédé selon l'une des revendications 7 à 10, dans lequel au moins un guide d'onde (6a, 6b) est inscrit dans la couche tampon (3) au moyen d'un faisceau laser ayant une forme définie par un microtrou carré.

## Claims

1. A component (1) including a substrate (2) and a buffer layer (3) deposited on this substrate, at least one wave guide (6a, 6b) on the buffer layer (3), and at least one groove (4a, 4b, 4c, 4d, 4e) receiving one end of an optical fiber (8, 9) in order to position and maintain this optical fiber end opposite an end of the wave guide (6a, 6b) in order to couple this optical fiber (8, 9) to the wave guide (6a, 6b), this groove (4a, 4b, 4c, 4d, 4e) being made in the buffer layer (3) and in the substrate (2) **characterized in that** the buffer layer (3) is made in a photosensitive organic-inorganic hybrid material.

2. The component according to claim 1, comprising at least one groove (4a, 4b, 4c, 4d, 4e) having a U-shaped section.

3. The component according to claim 2, comprising at least one groove (4a, 4b, 4c, 4d, 4e) having a U-shaped section with a square base.

4. The component according to one of claims 1 to 3, in which at least one groove (4a, 4b, 4c, 4d, 4d) extends along a longitudinal direction and comprises an essentially flat terminal wall (4'a, 4'e) realized in the substrate (2) and in the buffer layer (3), and in which this essentially flat wall (4'a, 4'e) extends along a normal direction to the longitudinal direction of the groove.

5. The component according to one of claims 1 to 4, comprising several grooves (4a, 4b, 4c, 4d, 4e) each receiving an optical fiber end (8, 9), and comprising a glass blade (10) stuck on the ends of several optical fibers (8, 9) in order to keep these optical fiber ends (8, 9) in position in the grooves (4a, 4b, 4c, 4d, 4e) in which they are respectively placed.

6. The component according to claim 5, in which the glass blade (10) comprises etched lines in which the optical fiber ends (8, 9) are positioned when this glass blade (10) is stuck on their ends.

7. A method for manufacturing a component (1) including a substrate (2) and a buffer layer (3) deposited on this substrate (2), at least one wave guide (6a, 6b) situated on the buffer layer (3), and at least one groove (4a, 4b, 4c, 4d, 4e) in order to position and maintain this optical fiber end opposite an end of the wave guide (6a, 6b) in order to couple this optical fiber (8, 9) to the wave guide (6a, 6b), consisting of:
- applying a buffer layer (3) in an organic-inorganic hybrid material on the substrate (2);
- masking one or several zones (4a, 4b, 4c, 4d, 4e) of the buffer layer (3) each corresponding to a groove to be etched, and insulating this buffer layer (3);
- forming one or several wave guides (6a, 6b) in the guide layer (5);
- etching the guide layer (5) and the buffer layer (3);
- etching, using a so-called RIE method, the substrate layer in each etched zone (4a, 4b, 4c, 4d, 4e) of the buffer layer (3) in order to finish each groove.

8. The method according to claim 7, in which a slight annealing is applied to the buffer layer (3) after insulation thereof, and before deposition of the guide layer (5) on this buffer layer (3).

9. The method according to claim 7 or 8, in which an overlay layer (7) similar to the buffer layer (3) is deposited after etching of the guide layer (5) and the buffer layer (3), and is masked and etched to cover each wave guide, before implementation of the RIE etching method.

10. The method according to one of claims 7 to 9, in which the buffer layer (3) and/or the overlay layer (7) constitute a mask to etch the substrate (2) using the RIE method in order to finish each groove.

11. The method according to one of claims 7 to 10, in which at least one wave guide (6a, 6b) is formed in the buffer layer (3) using a laser beam having a form defined by a square pit.

## Patentansprüche

1. Bauteil (1), das ein Substrat (2) und eine auf diesem Substrat aufgebrachte Pufferschicht (3), mindestens einen Wellenleiter (6a, 6b) auf der Pufferschicht (3) und mindestens eine Auskehlung (4a, 4b, 4c, 4d, 4e) einschließt, die ein optisches Faserende (8, 9) aufnimmt, um dieses optische Faserende gegenüber einem Ende des Wellenleiters (6a, 6b) zu positionieren und zu halten, um diese optische Faser (8, 9) mit dem Wellenleiter (6a, 6b) zu verbinden, wobei diese Auskehlung (4a, 4b, 4c, 4d, 4e) in der Pufferschicht (3) und in dem Substrat (2) realisiert ist, **dadurch gekennzeichnet, dass** die Pufferschicht (3) aus einem lichtempfindlichen organisch-anorganischem Hybridmaterial realisiert ist.

2. Bauteil nach Anspruch 1, das mindestens eine Auskehlung (4a, 4b, 4c, 4d, 4e) umfasst, die einen U-förmigen Querschnitt aufweist.

3. Bauteil nach Anspruch 2, das mindestens eine Auskehlung (4a, 4b, 4c, 4d, 4e) umfasst, die einen U-förmigen Querschnitt mit quadratischer Basis aufweist.

4. Bauteil nach einem der Ansprüche 1 bis 3, wobei sich mindestens eine Auskehlung (4a, 4b, 4c, 4d, 4e) in eine Längsrichtung erstreckt und eine etwa ebene terminale Wand (4'a, 4'e) umfasst, die in dem Substrat (2) und in der Pufferschicht (3) realisiert ist, und wobei sich diese etwa ebene Wand (4'a, 4'e) in eine senkrechte Richtung zur Längsrichtung der Auskehlung erstreckt.

5. Bauteil nach einem der Ansprüche 1 bis 4, das mehrere Auskehlungen (4a, 4b, 4c, 4d, 4e) umfasst, von denen jede ein optisches Faserende (8, 9) aufnimmt, und ein Glasplättchen (10) umfasst, das auf die Enden mehrerer optischer Fasern (8, 9) geklebt ist, um diese optischen Faserenden (8, 9) in den Auskehlungen (4a, 4b, 4c, 4d, 4e), in denen sie jeweils platziert sind, in Position zu halten.

6. Bauteil nach Anspruch 5, wobei das Glasplättchen (10) gravierte Linien umfasst, in denen die optischen Faserenden (8, 9) positioniert sind, wenn dieses Glasplättchen (10) auf ihre Enden geklebt ist.

7. Verfahren zur Herstellung eines Bauteils (1), das ein Substrat (2) und eine auf diesem Substrat (2) aufgebrachte Pufferschicht (3), mindestens einen auf der Pufferschicht (3) befindlichen Wellenleiter (6a, 6b) und mindestens eine Auskehlung (4a, 4b, 4c, 4d, 4e) einschließt, um dieses optische Faserende gegenüber einem Ende des Wellenleiters (6a, 6b) zu positionieren und zu halten, um diese optische Faser (8, 9) mit dem Wellenleiter (6a, 6b) zu verbinden, das darin besteht:
- eine Pufferschicht (3) aus organisch-anorganischem Hybridmaterial auf dem Substrat (2) aufzutragen,
- einen oder mehrere Bereiche (4a, 4b, 4c, 4d, 4e) der Pufferschicht (3) zu maskieren, von denen jede einer zu gravierenden Auskehlung entspricht, und diese Pufferschicht (3) zu isolieren,
- eine leitende Schicht (5) auf der Pufferschicht (3) aufzubringen,
- einen oder mehrere Wellenleiter (6a, 6b) in die leitende Schicht (5) einzuschreiben,
- die leitende Schicht (5) und die Pufferschicht (3) zu ätzen,
- die Substratschicht mittels eines als RIE bezeichneten Verfahrens in jeden geätzten Bereich (4a, 4b, 4c, 4d, 4e) der Pufferschicht (3) zu ätzen, um jede Auskehlung fertigzustellen.

8. Verfahren nach Anspruch 7, wobei die Pufferschicht (3) nach Isolierung und vor Aufbringen der leitenden Schicht (5) auf diese Pufferschicht (3) leicht geglüht wird.

9. Verfahren nach Anspruch 7 oder 8, wobei eine der Pufferschicht (3) ähnelnde Abdeckschicht (7) nach Ätzen der leitenden Schicht (5) und der Pufferschicht (3) aufgebracht und maskiert und geätzt wird, um jeden Wellenleiter abzudecken, vor Durchführung des RIE-Ätzverfahrens.

10. Verfahren nach einem der Ansprüche 7 bis 9, wobei die Pufferschicht (3) und/oder die Abdeckschicht (7) eine Maske darstellen, um das Substrat (2) durch RIE-Verfahren zu ätzen, um jede Auskehlung fertigzustellen.

11. Verfahren nach einem der Ansprüche 7 bis 10, wobei mindestens ein Wellenleiter (6a, 6b) in die Pufferschicht (3) mit einem Laserstrahlbündel eingeschrieben ist, das eine durch ein quadratisches Mikroloch definierte Form hat.
